(19) Europäisches Patentamt
European Patent Office
Office européen des brevets

(11) Publication number: **0 311 480 A2**

(12) **EUROPEAN PATENT APPLICATION**

(21) Application number: **88402419.1**

(22) Date of filing: **26.09.88**

(51) Int. Cl.[4]: **C 09 K 19/12**
C 07 C 69/035

(30) Priority: **07.10.87 JP 251570/87**

(43) Date of publication of application: **12.04.89 Bulletin 89/15**

(84) Designated Contracting States: **DE FR GB**

(71) Applicant: **Showa Shell Sekiyu Kabushiki Kaisha**
**7-3, Marunouchi 2-chome Chiyoda-ku**
**Tokyo 100 (JP)**

(72) Inventor: **Kawamura, Ichiro**
**8-4-13, Tsukimino**
**Yamato-shi Kanagawa 242 (JP)**

**Yamada, Yuichiro**
**57, Horagai 3-chome Midori-ku**
**Nagoya-shi Aichi 458 (JP)**

(74) Representative: **Bourgognon, Jean-Marie et al**
**Cabinet Flechner 22, Avenue de Friedland**
**F-75008 Paris (FR)**

(54) **Liquid crystal compound.**

(57) A liquid crystal compound of

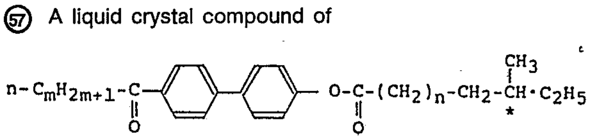

( I )

(where m is an integer of 6 - 11 and n is an integer of 0 - 6) which is useful for an electric indicative element and is prepared by esterification of p-phenylphenol with acetyl chloride, allowing n-alkanoyl chloride to react the ester obtained above to obtain p-(4′-n-alkanoylphenyl)phenyl acetate, ester exchange of the acetate to obtain p-(4′-n-alkanoylphenyl)phenol and then allowing the phenol to react with optically active 4-methylhexanoic acid.

FIG. 1

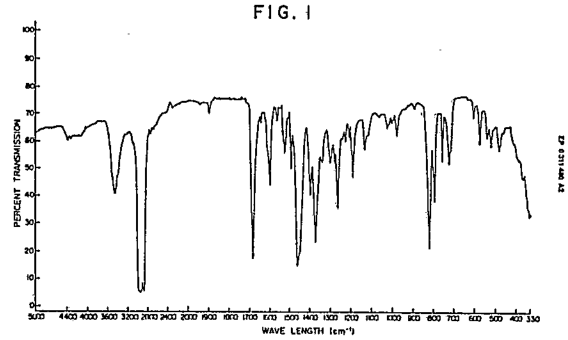


EP 0 311 480 A2

**Description**

## LIQUID CRYSTAL COMPOUND

The present invention relates to a novel liquid crystal compound useful for an electric indicative element which utilizes a ferroelectric smectic liquid crystal having high speed of response to electric fields.

A liquid crystal indicative element is, among electric indicative elements, familiar as various indicative elements owing to operability at low voltage, low electric power consumption, possibility of making thickness small, reflex display with little tiredness of eye and so on.

A nematic liquid crystal named as twisted nematic one (i.e., TN type) is nowadays the most familiar, but is inferior to the other light-emitting indicative elements in respect to speed of response. On the other hand, a ferroelectric liquid crystal has so remarkably higher speed of response than any of the conventional liquid crystals, that an application is being expected to moving images of television, a high speed light shutter and other indicative elements. In particular, chiral smectic C (i.e., SC *) phase is the most attractive from a practical point of view.

Some of chiral smectic C phase liquid crystal compounds have been studied. One of them is optically active compound of the formula:

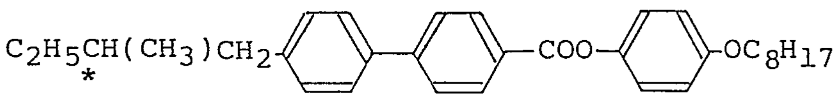

(JP Kokai 53-22883). Spontaneous polarization of this compound is small. Another is

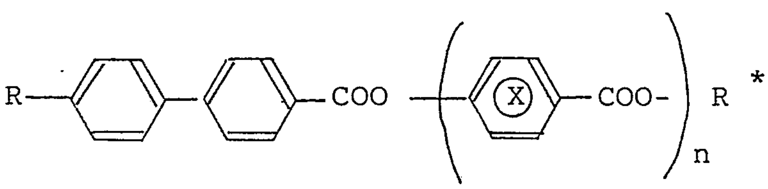

wherein R stands for a $C_{1-20}$ alkyl or alkoxy group; X stands for a halogen atom;

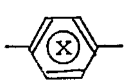

stands for a 1,4-phenylene group substituted or not-substituted with a halogen; n stands for zero or one; and R* stands for an optically active group (JP Kokai 61-249953). Initiation of appearance of a chiral smectic phase at the high temperature range, trouble in introduction of a chiral group and not enough spontaneous polarization are difficulties encountered.

The present invention is directed to a liquid crystal compound of the formula

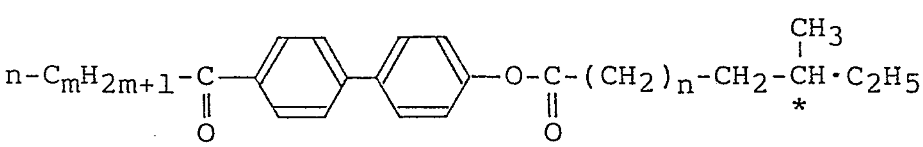 (I)

wherein m stands for an integer of 6 to 11, n stands for an integer of 0 to 6 and the mark (*) shows an asymmetric carbon atom.

The present compound is ferroelectric having phase transition temperature near room temperature, large spontaneous polarization and high speed of response, and being stable from both photochemical and chemical points of view. Introduction of a chiral group is ready when the present compound is synthesized.

Synthesis of the present compond

1)

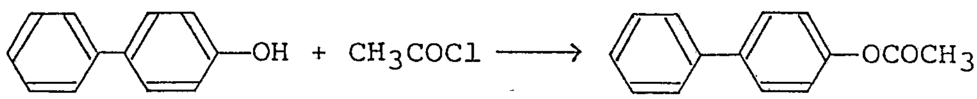

( II )

2)

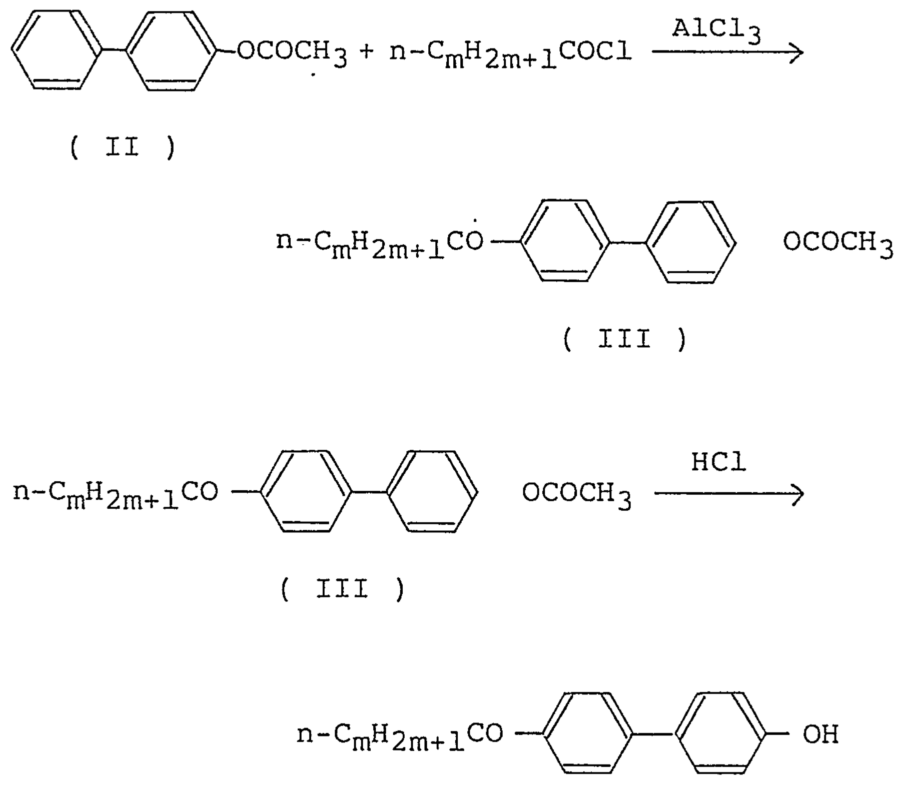


(II)

(III)

(III)

(IV)

3)

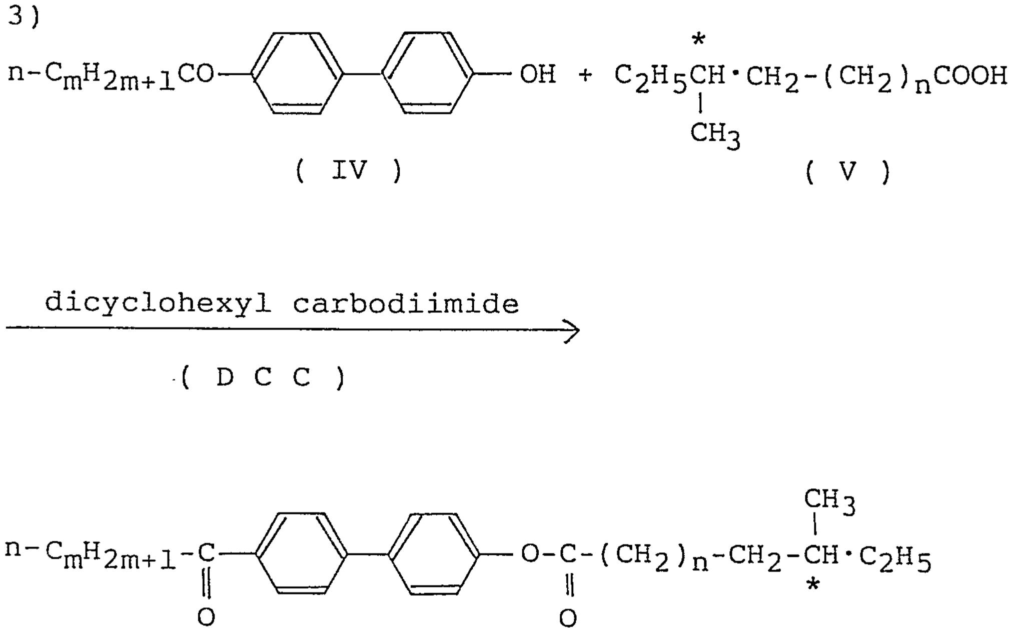


(IV)

(V)

(I)

wherein m stands for an integer of 6 to 11, n stands for an integer of 0 to 6 and the mark * shows an asymmetric

carbon atom.

Esterification of p-phenylphenol with acetyl chloride provides ester (II). Allowing n-alkanoyl chloride to react with the ester (II) gives p-(4′-n-alkanoylphenyl)phenyl acetate (III).

Ester exchange of the compound (III) produces p-(4′-n-alkanoylphenyl)phenol (IV). Allowing the compound (IV) to react with optically active alkanoicacid having a methyl group on the third carbon atom from the ω carbon (V) in the presence of dicyclohexyl carbodiimide and a small amount of 4-N,N-dimethylaminopyridine in anhydrous tetrahydrofuran (THF) provides the desired optically active p-(4′-n-alkanoylphenyl)phenyl alkylcarboxylate (I).

Examples

Example 1

A compound where m=8 n=1 in the formula (I) of optically active p-(4′-n-alkanoylphenyl)phenyl 4-methylhexanoate.

1. Synthesis of p-(4′-n-nonanoylphenyl)phenol

To p-phenylphenol (0.1 mol) was added acetyl chloride (0.1 mol). A mixture was allowed to react for one hour at room temperature until ester (II) was obtained. To the ester (II) was added n-nonanoyl chloride (0.15 mol) until p-(4′-n-nonanoylphenyl)phenyl acetate (III, M=8 n=1) was obtained. Hydrogen chloride in alcohol was added to the acetate (III) in order to effect ester exchange to obtain p-(4′-n-nonanoylphenyl)phenol (IV, m=8, 0.06 mol).

Fig. 1 shows IR spectrum (nujol) of the compound (IV, m=8 n=1).

2. Synthesis of optically active p-(4′-n-nonanoylphenyl)phenyl 4-methylhexanoate

To anhydrous tetrahydrofuran (THF, 60 ml) were charged p-(4′-n-nonanoylphenyl)phenol (IV, m=8, 20 mmol), optically active 4-methylhexanoic acid (20 mmol), dicyclohexyl carbodiimide (DCC, 22 mmol) and a small amount of 4-N,N-dimethyl aminopyridine. The mixture was stirred for 2 hours at room temperature. After a solid material left undissolved was filtered, THF was distilled from the filtrate. The residue obtained was repeatedly recrystallized in ethanol to obtain the titled ester compound (I, m=8, n=1, 9 mmol).

Fig. 2 and Tables 1, 2 and 3 show IR spectrum (nujol), $^{1}$HNMR spectrum data and phase transition temperatures by differential thermal analysis (Seiko Denshi Kogyo, DSC-20) and by a hot stage and a polarizing microscope of the compound (I, m=8, n=1), respectively.

Example 2

A compound where m=9 in the formula (I) of optically active p-(4′n-alkanoylphenyl)phenyl 4-methylhexanoate

1. Synthesis of p-(4′n-decanoylphenyl)phenol

To p-phenylphenol (0.1 mol) was added acetyl chloride (0.1 mol). A mixture was allowed to react for one hour at room temperature until ester (II) was obtained. To the ester (II) was added n-decanoyl chloride (0.15 mol) until p-(4′-n-decanoylphenyl)phenyl acetate (III, m=9, n=1) was obtained. Hydrogen chloride in alcohol was added to the acetate (III) in order to effect ester exchange to obtain p-(4′-n-decanoylphenyl)phenol (IV, m=9, 0.06 mol).

Fig. 3 shows IR spectrum (nujol) of the compound (IV, m=9).

2. Synthesis of optically active p-(4′-n-decanoylphenyl)phenyl 4-methylhexanoate

To anhydrous tetrahydrofuran (THF, 60 ml) were charged p-(4′-n-decanoylphenyl)phenol (IV, m=9, 20 mmol), optically active 4-methylhexanoic acid (20 mmol), dicyclohexyl carbodiimide (DCC, 22 mmol) and a small amount of 4-N,N-dimethyl aminopyridine. The mixture was stirred for 2 hours at room temperature. After a solid material left undissolved was filtered, THF was distilled from the filtrate. The residue obtained was repeatedly recrystallized in ethanol to obtain the titled ester compound (I, m=9, n=1, 9 mmol).

Fig. 4 and Tables 1, 2 and 3 show IR spectrum (nujol), $^{1}$HNMR spectrum data and phase transition temperatures by differential thermal analysis (Seiko Denshi Kogyo, DSC-20) and by a hot stage and a polarizing microscope of the compound (I, m=9, n=1), respectively.

Table 1

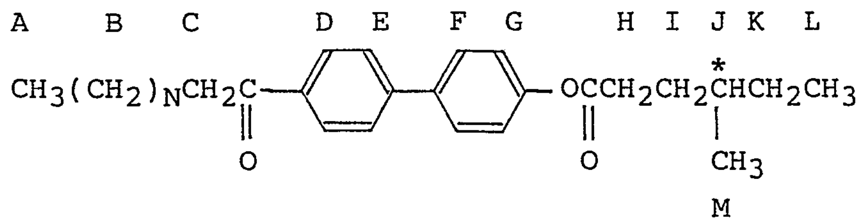

| Proton | Chemical shift ppm | remarks |
|---|---|---|
| A | 0.89 | doublet |
| B | 1.27 | |
| C | 2.94 | triplet |
| D | 7.65 | |
| E | 7.50 | |
| F | 7.13 | doublet |
| G | 7.98 | doublet |
| H | 2.55 | triplet |
| I | 1.30 | |
| J | 1.30 | |
| K | 1.27 | |
| L | 0.89 | triplet |
| M | 0.89 | doublet |

Notes:

(1) Assignment of $^1H$ spectrum.

(2) Symbol N is 6 or 7; no change in chemical shift and assignment of $^1H$ spectrum, whichever it may be.

(3) Apparatus: Nihon Denshi Co., Ltd. FX-60Q (60 MHz)

(4) In heavy hydrogen chloroform solvent.

Table 2

| No. | m | Temperature increasing (°C) | Temperature decreasing (°C) |
|---|---|---|---|
| 1 | 8 | 56, 60.115 | 65.115 |
| 2 | 9 | 114.51 | 113.59 |

n=1

Table 3

| No. | m | Phase transition temperature (°C) |
|---|---|---|
| 1 | 8 | $Cr \underset{63.1}{\overset{74.2}{\rightleftharpoons}} S_A \underset{112.0}{\overset{108.9}{\rightleftharpoons}} Iso$ |
| 2 | 9 | $Cr$ — $S_C{*} \underset{99.8}{\overset{81.0}{\rightleftharpoons}} S_A \underset{114.2}{\overset{112.2}{\rightleftharpoons}} Iso$; $S_C{*} \xrightarrow{68.0} S_X \xrightarrow{62.2} Cr$ |

n=1

Almost all of the present compounds have $S_C{*}$ phase.

**Claims**

1. A liquid crystal compound of

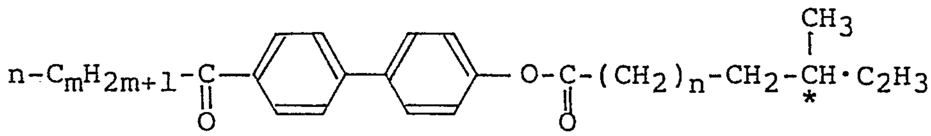

( I )

where m is an integer of 6 - 11 and n is an integer of 0 - 6.

FIG. I

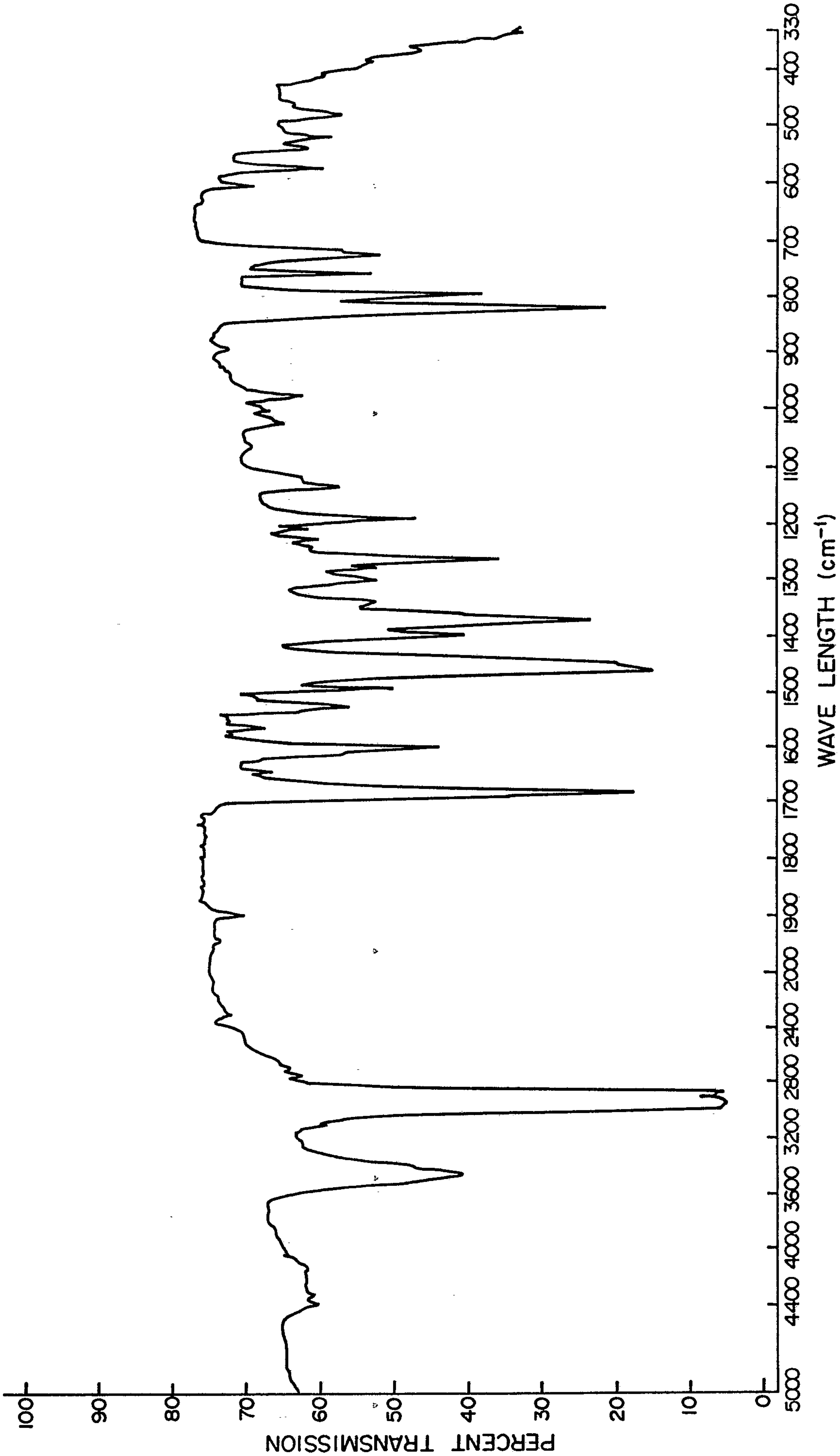
PERCENT TRANSMISSION
0
10
20
30
40
50
60
70
80
90
100
WAVE LENGTH (cm⁻¹)
5000
4400
4000
3600
3200
2800
2400
2000
1900
1800
1700
1600
1500
1400
1300
1200
1100
1000
900
800
700
600
500
400
330

FIG. 2

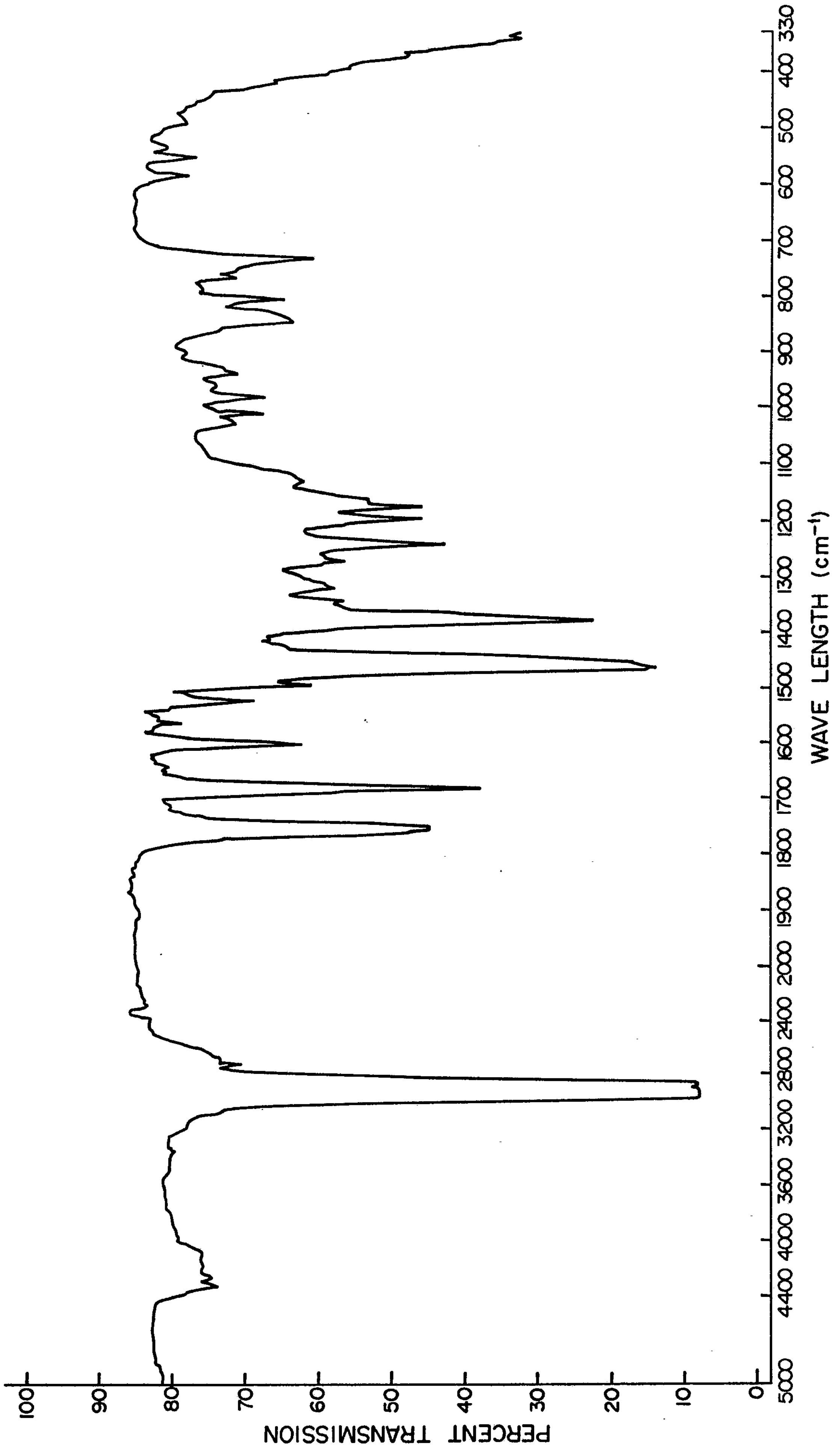
PERCENT TRANSMISSION
0
10
20
30
40
50
60
70
80
90
100
WAVE LENGTH (cm⁻¹)
5000
4400
4000
3600
3200
2800
2400
2000
1900
1800
1700
1600
1500
1400
1300
1200
1100
1000
900
800
700
600
500
400
330

FIG. 3

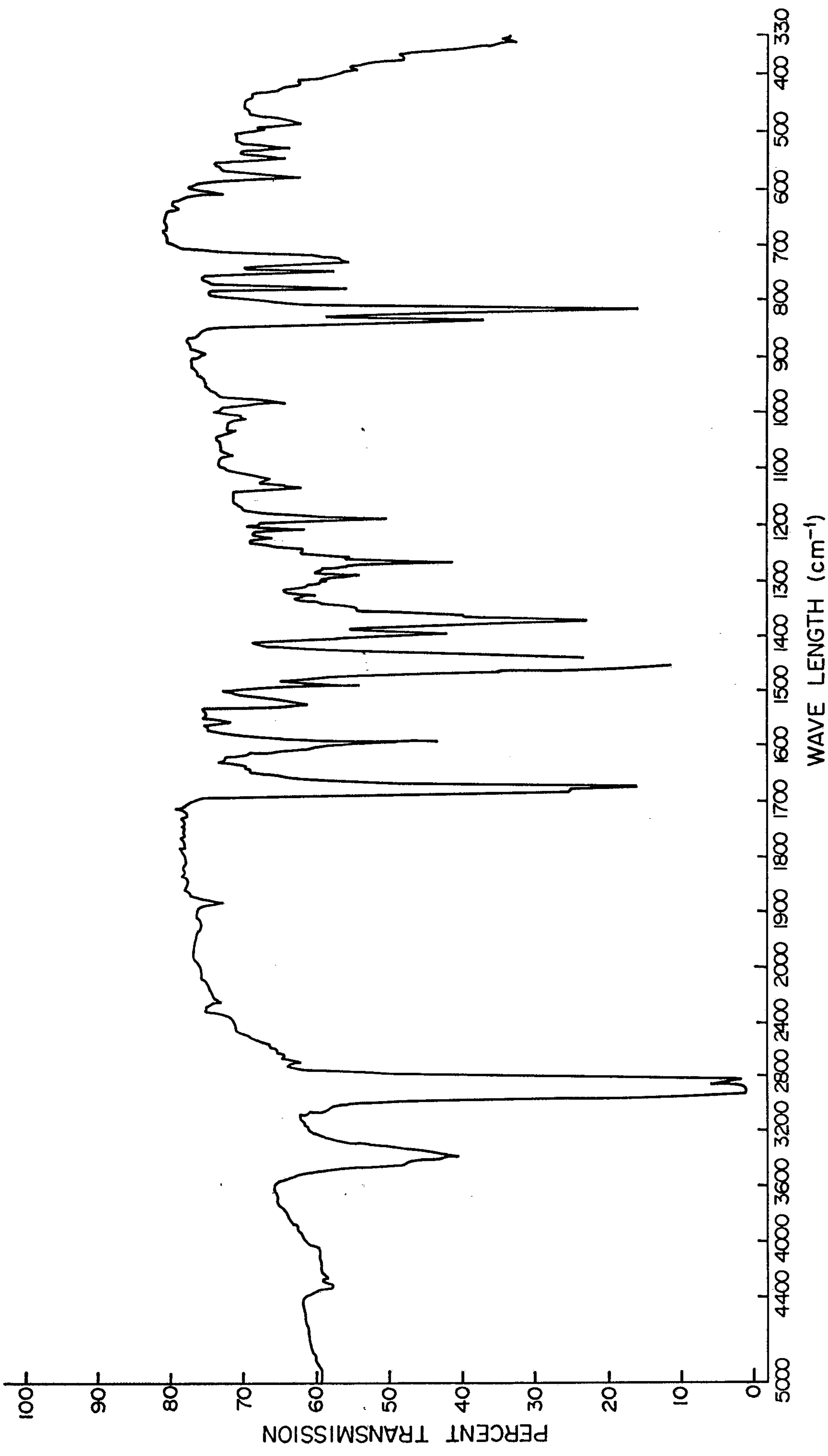
PERCENT TRANSMISSION
WAVE LENGTH (cm⁻¹)
0 10 20 30 40 50 60 70 80 90 100
5000 4400 4000 3600 3200 2800 2400 2000 1900 1800 1700 1600 1500 1400 1300 1200 1100 1000 900 800 700 600 500 400 330

FIG. 4

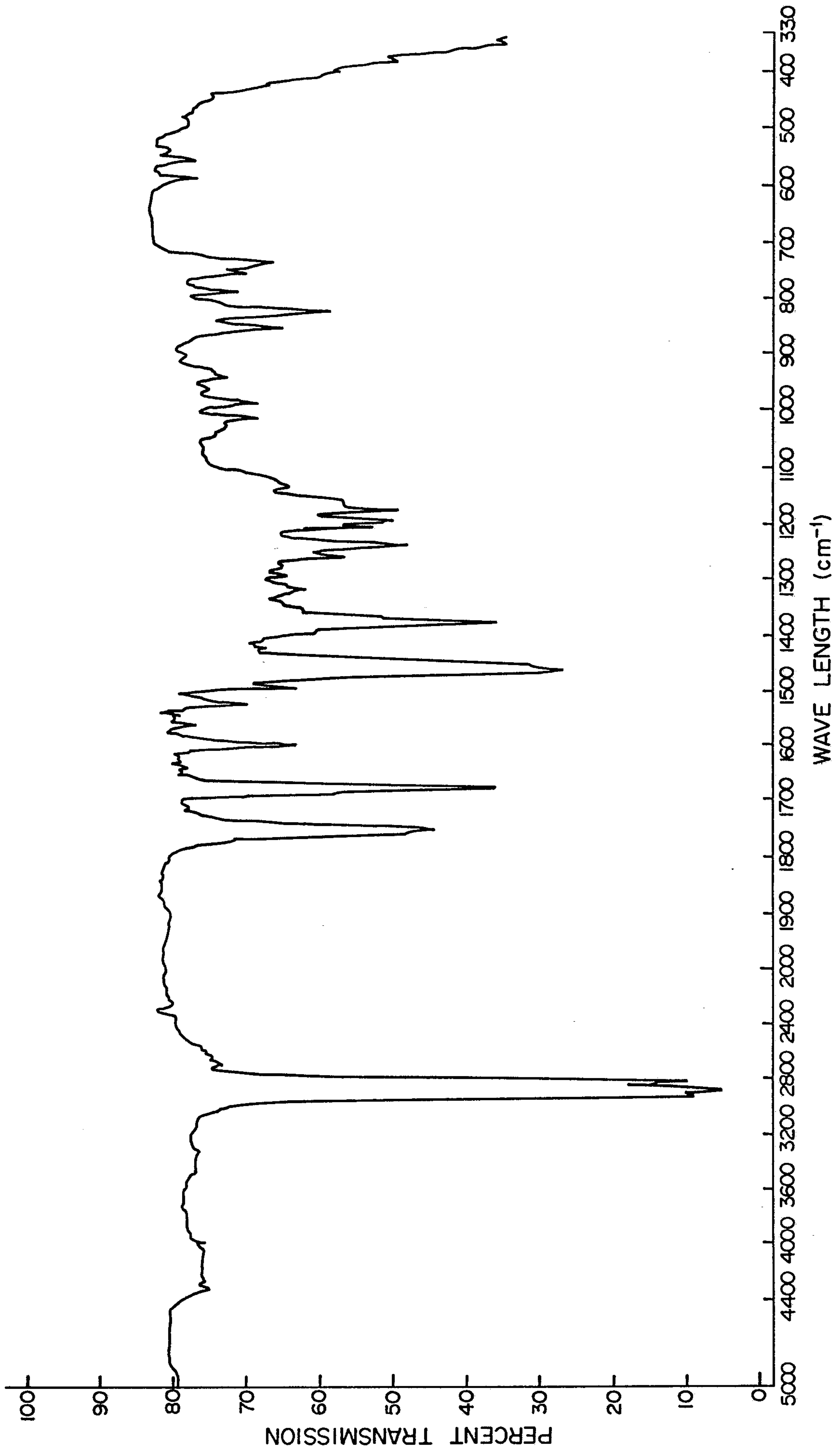
PERCENT TRANSMISSION
100
90
80
70
60
50
40
30
20
10
0
5000
4400
4000
3600
3200
2800
2400
2000
1900
1800
1700
1600
1500
1400
1300
1200
1100
1000
900
800
700
600
500
400
330
WAVE LENGTH (cm⁻¹)